# EUROPEAN PATENT APPLICATION

(11) **EP 1 677 137 A1**
(43) Date of publication of application: **05.07.2006**
(21) Application number: 04792425.3
(22) Date of filing: 07.10.2004
(51) Int. Cl.: G02F 1/01, G03B 9/02, G03B 11/00

(54) **LIGHT QUANTITY CONTROL DEVICE AND CAMERA DEVICE**

(30) Priority: 22.10.2003 JP 2003361611
(71) Applicant: SONY CORPORATION, Tokyo 141-0001 (JP)
(72) Inventor: SATO, Yutaka, c/o Sony Corporation, Shinagawa-ku, Tokyo 141-0001 (JP); TABEI, Hiroyuki, c/o Sony Corporation, Shinagawa-ku, Tokyo 141-0001 (JP); NAKAYAMA, Nobutaka, c/o Sony LSI Design Inc., Yokohama-shi, Kanagawa 240-0005 (JP)
(74) Representative: Mills, Julia
(86) International application number: PCT/JP2004/015197
(87) International publication number: WO 2005/040898

(57) **Abstract**

The variation of shades due to light transmissivity controlled by a property device is suppressed with a simple structure. An optical device 1 that blocks light having a wavelength longer than a predetermined wavelength is disposed in a property device 20 that is composed of for example liquid crystal and that can control light transmissivity. The optical device 1 blocks light having a longer wavelength than a wavelength at which a wavelength band of which the wavelength dependency of spectrum characteristic of the property device 20 is weak changes to a wavelength band of which the wavelength dependency of spectrum characteristic of the property device 20 is strong. The optical device 1 blocks light having a longer wavelength than a predetermined wavelength emitted from an object. The property device 20 controls the light transmissivity and enters the light to an image sensor 3. The optical device 1 is capable of selectively entering light having a wavelength band whose spectrum characteristic is stable to the image sensor 3. Even if the light transmissivity of the property device 20 is varied, the color balance is kept nearly constant.

## Description

### Technical Field

The present invention relates to a light amount control apparatus and a camera apparatus that use a property device that is capable of controlling light transmissivity to control the amount of light that enters an image sensor that converts light into electricity.

### Background Art

As means that controls the amount of incident light of a camera and so forth, a mechanical diaphragm is used. In an image optical system, light emitted from an object enters an image sensor such as a CCD (Charge Coupled Device) that converts light into electricity through an optical system. In this structure, a mechanical diaphragm is disposed in the optical system. The mechanical diaphragm controls the amount of light that enters the image sensor to control the exposure of the image sensor. The mechanical diaphragm has a structure of which the aperture ratio of the diaphragm is mechanically varied to limit the amount of incident light. When the mechanical diaphragm is used, since the aperture ratio is varied, the depth of field is varied. The depth of field affects a captured image. With the depth of field, an image can be effectively captured. However, the camera user may be confused with the depth of field. When a camera is mounted in a mobile phone terminal or the like, because of its size, the mechanical diaphragm may not be used.

On the other hand, a camera that uses a property device in an image optical system has been proposed. The property device is composed of for example liquid crystal and is capable of controlling the light transmissivity. The camera is capable of controlling the amount of incident light of an image sensor and compensating the exposure of the image sensor with the property device. This camera is capable of controlling the amount of exposure without need to varying the aperture ratio. Thus, the camera user does not need to consider the depth of field. As a result, even if the size of the camera is small, the camera can use a wide range of light amount.

The forgoing property device composed of liquid crystal has wavelength dependency of light transmissivity. Hereinafter, the wavelength dependency of light transmissivity is referred to as the spectral characteristic. The spectral characteristic is not suitable for cameras. In other words, when the spectral characteristics are different, shades are different. Thus, the shades of a captured image vary depending on the right transmissivity of the property device. To solve this problem, a technology that uses compensation means for compensating the wavelength dependency of light transmissivity has been proposed in Japanese Patent Publication No. 2987015.

The spectral characteristic of the property device largely varies from the permissible color characteristic of a camera. Thus, it is preferred to compensate the spectral characteristic. In addition, since the spectral characteristic depends on light transmissivity, values of colors to be compensated for necessary light transmissivity are not constant. Values of colors need to be very finely compensated. In addition, since the characteristics of property devices vary, they cannot be used for cameras. It is necessary to obtain values to be compensated for each property device. Moreover, since the spectral characteristic of each property device varies depending on an environmental condition such as temperature in which the camera is used, the compensation values need to be further compensated. As a result, the amount of compensated data becomes very large.

In addition, the adjustment time for which individual compensation values are obtained becomes long. Moreover, it is difficult to stably prepare a measurement environment. Thus, there are many problems in the practical use of the wavelength dependency of light transmissivity.

On the other hand, many image sensors for cameras use a photoelectric effect of silicon monocrystal. However, the photoelectric effect often occurs for light having wavelengths shorter than 1100 nm as near infrared rays. Except for cameras that capture images using infrared rays, it is necessary to use image signals of visible rays as output signal of the image sensor. Otherwise, brightness and colors of an image that the camera user watches differ from those of an image that a television or a monitor displays with image signals.

To prevent this difference from occurring, a characteristic of which a near infrared region of light is blocked is provided by for example an optical filter to an optical system that light of an object enters and that is disposed in front of an image sensor. The optical filter has a characteristic of which the visual sensitivity is obtained in the visual light region (380 nm to 780 nm) and the light transmission amount can be ignored in the infrared region whose wavelengths are longer than the those of the visual light region. For example, an optical filter that has a characteristic of which the light transmissivity gradually decreases from a wavelength of around 600 nm in the visible light region to a wavelength of around 800 nm in the infrared region is used.

A particular camera has an optical filter that does not decrease the light transmissivity in the visual light region with a difference between visual sensitivity in the visual light region and brightness of a monitor (captured image) and that sharply decreases the light transmissivity at the boarder of the visual light region and the infrared ray region to improve the sensitivity.

In addition, response time of many property devices that are composed of liquid crystal and that can control light transmissivity is slow.

In contrast, when property devices have quick response time, they have a relatively narrow wavelength range. These property devices can control light transmissivity in only a part of the visual light region. They cannot decrease light transmissivity in a wavelength region higher than red.

### Disclosure of the Invention

Therefore, an object of the present invention is to provide a light amount control apparatus and a camera apparatus that are capable of suppressing variations of shades corresponding to light transmissivity controlled by a property device with a simple structure.

To solve the foregoing problem, the present invention is an optical amount control apparatus that controls the amount of light with a property device that is capable of controlling light transmissivity, comprising an optical device that blocks light having a wavelength longer than a predetermined wavelength in a visible light region, and the property device that is disposed on the same optical axis as the optical device and that is capable of controlling the light transmissivity.

In addition, the present invention is a camera apparatus that controls the amount of incident light of an image sensor with a property device that is capable of controlling light transmissivity, comprising an optical device that blocks light having a wavelength longer than a predetermined wavelength in a visible light region, the property device that is disposed on the same optical axis as the optical device and that is capable of controlling the light transmissivity, and image capturing means for capturing light that is emitted from an object through the optical device and the property device.

Claim 1 of the present invention has an optical device that blocks light having a wavelength longer than a predetermined wavelength in a visible light region, and a property device that is disposed on the same optical axis as the optical device and that is capable of controlling the light transmissivity. Thus, light in a longer wavelength region that has strong wavelength dependency in the visual light region of the spectral characteristic of a property device can be blocked with an optical device. Thus, light in a wavelength region of which the spectral characteristic of the property device is stable can be used.

Claim 3 of the present invention has an optical device that blocks light having a wavelength longer than a predetermined wavelength in a visible light region, a property device that is disposed on the same optical axis as the optical device and that is capable of controlling the light transmissivity, and image capturing means for capturing light that is emitted from an object through the optical device and the property device. By controlling the light transmissivity of the property device, the amount of incident light of the image capturing means is controlled. Thus, light in a longer wavelength band that has strong wavelength dependency in the visual light region of the spectral characteristic of a property device can be blocked with an optical device. Thus, light in a wavelength band of which the spectral characteristic of the property device is stable can be entered into the image capturing means.

### Brief Description of Drawings

Fig. 1 is a block diagram showing an example of the structure of a camera apparatus according to an embodiment of the present invention;
Fig. 2 is a schematic diagram showing an example of a spectral characteristic of each of several shades of a property device;
Fig. 3 is a schematic diagram showing an example of a spectral characteristic of an optical device;
Fig. 4 is a schematic diagram showing a spectral characteristic of which the characteristic of the property device and the characteristic of the optical device are added; and
Fig. 5A and Fig. 5B are schematic diagrams describing the difference of output characteristics depending on whether the optical device is present. Best Modes for Carrying out the Invention

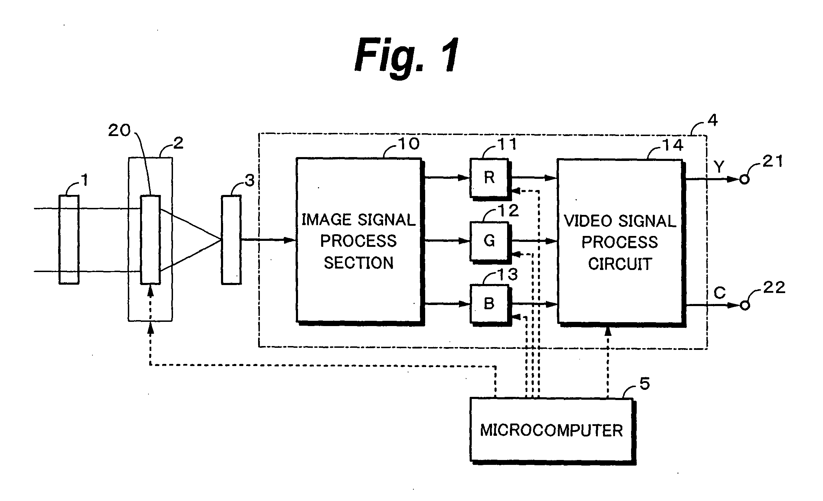

Next, with reference to the accompanying drawings, an embodiment of the present invention will be described. Fig. 1 shows an example of the structure of a camera apparatus according to this embodiment of the present invention. An optical device 1 is an optical filter that blocks light having a wavelength longer than a predetermined wavelength. An image optical system 2 has a lens system (not shown) and a property device 20 that controls light transmissivity with liquid crystal. The property device 20 is composed of two opposite transparent electrodes for which a predetermined alignment process has been performed and liquid crystal sandwiched therebetween. When a voltage applied to the electrodes is controlled, the light transmissivity can be varied from transmission state of which the light transmissivity is nearly 100 % to blockage state of which the light transmissivity is nearly 0 %. An image sensor 3 is a device that converts incident light into an electric signal. An example of the image sensor 3 is a CCD (Charge Coupled Device).

Light emitted from an object enters the image sensor 3 through the optical device 1 and the image optical system 2. The image sensor 3 converts the incident light into an electric signal and supplies the electric signal as an image signal to a signal process section 4. The image signal supplied to the signal process section 4 is supplied to an image signal process section 10.

The image signal process section 10 generates a red (R) signal, a green (G) signal, and a blue (B) signal with the image signal supplied from the image sensor 3. The R signal, the G signal, and the B signal are supplied to an R signal amplifier 11, a G signal amplifier 12, and a B signal amplifier 13, respectively. These amplifiers 11, 12, and 13 adjust the gains of these signals for white balance. Outputs of the R signal amplifier 11, the G signal amplifier 12, and the B signal amplifier 13 are supplied to a video signal process circuit 14. The video signal process circuit 14 generates a luminance signal Y and a chromatic signal C with the R signal, the G signal, and the B signal. The luminance signal Y and the chromatic signal C are obtained as video output signals of the camera apparatus from terminals 21 and 22, respectively.

A microcomputer 5 generates various types of control signals to control individual sections of the camera apparatus. The microcomputer 5 generates a control signal to control light transmissivity of the property device 20 of the image optical system 2. The control signal is supplied to the image optical system 2. The microcomputer 5 adjusts the gains of the R signal amplifier 11, the G signal amplifier 12, and the B signal amplifier 13 for white balance.

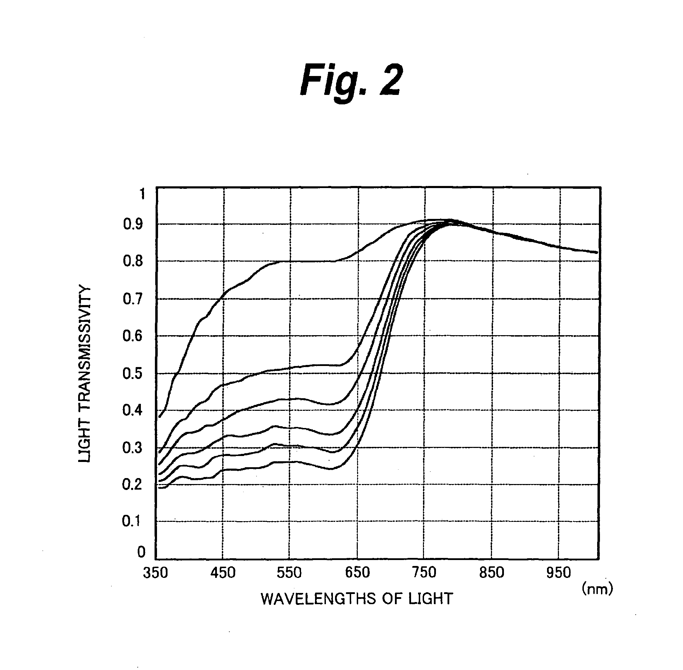

Fig. 2 shows an example of spectral characteristics of each of several shades of the property device 20 of the image optical system 2. Fig. 2 shows spectral characteristics of which the property device 20 is controlled with six light transmissivities. In the six light transmissivities, the largest light transmissivity is denoted by L1, whereas the smallest light transmissivity is denoted by L6. In this example, except for the state L1, the largest light transmissivity, it is clear that the wavelength dependency of light transmissivity is strong from a band of 600 nm to 650 nm to a band of 750 nm to 800 nm. In the example shown in Fig. 2, the wavelength dependency of spectral characteristic of the property device 20 is weak from a short wavelength band to a wavelength of around 650 nm. The tendency of the wavelength dependency varies at a wavelength of around 650 nm. The wavelength dependency of spectral characteristic is strong from a wavelength of around 650 nm to a wavelength of around 780 nm. In the state L1, the same tendency appears at a wavelength of around 650 nm.

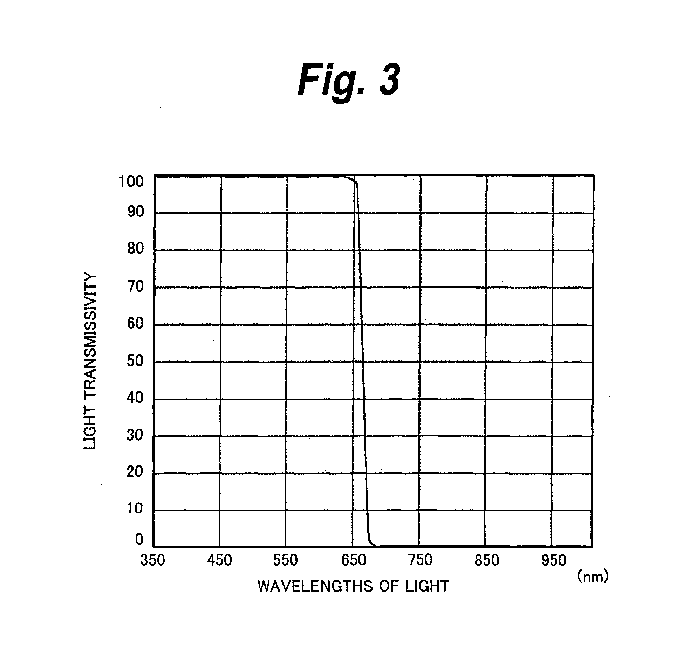

Fig. 3 shows an example of the spectral characteristic of the optical device 1. The optical device 1 has a characteristic of which it sharply attenuates transmissivity of light having longer wavelengths than a predetermined wavelength. A wavelength at which the optical device 1 sharply attenuates light transmissivity corresponds to a wavelength at which the wavelength dependency of light transmissivity of the property device 20 becomes strong. In this example, the light transmissivity of the optical device 1 is 100 % in a wavelength band shorter than around 650 nm. The light transmissivity of the optical device 1 sharply attenuates in a wavelength band from around 650 nm to around 680 nm. The light transmissivity of the optical device 1 becomes around 0 % in a wavelength band longer than around 680 nm.

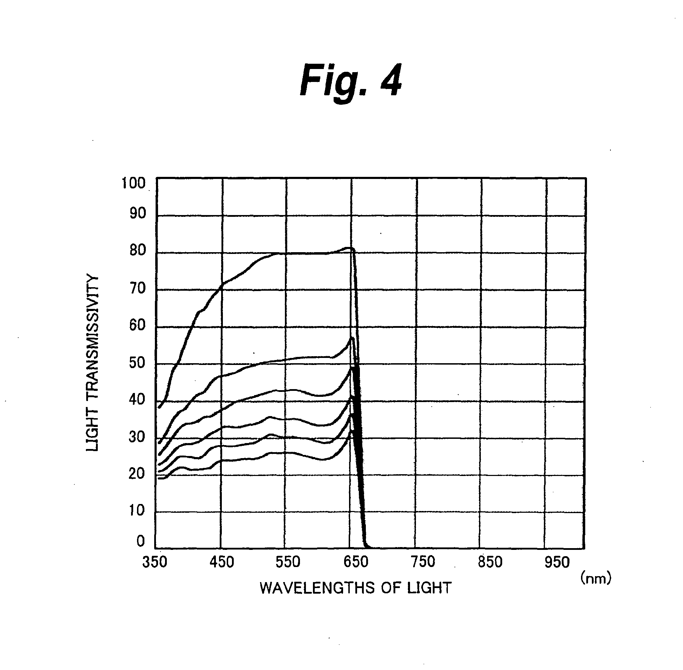

Fig. 4 shows the spectral characteristic of which the characteristic of the property device 20 shown in Fig. 2 and the characteristic of the optical device 1 are added. In other words, the characteristic shown in Fig. 4 is the total spectral characteristic of which the spectral characteristic of the optical device 1 and the spectral characteristic of the image optical system 2 are added. Light that has such a characteristic enters the image sensor 3. As shown in Fig. 4, the optical device 1 sharply attenuates the light transmissivity at a wavelength of around 650 nm. Thus, the optical device 1 suppresses the light transmissivity in a wavelength band longer than 650 nm. As a result, the optical device 1 blocks light in a wavelength band of which the wavelength dependency of light transmissivity of the property device 20 is strong. Thus, light in a wavelength band of which the wavelength dependency of light transmissivity is weak can be selectively input to the image sensor 3.

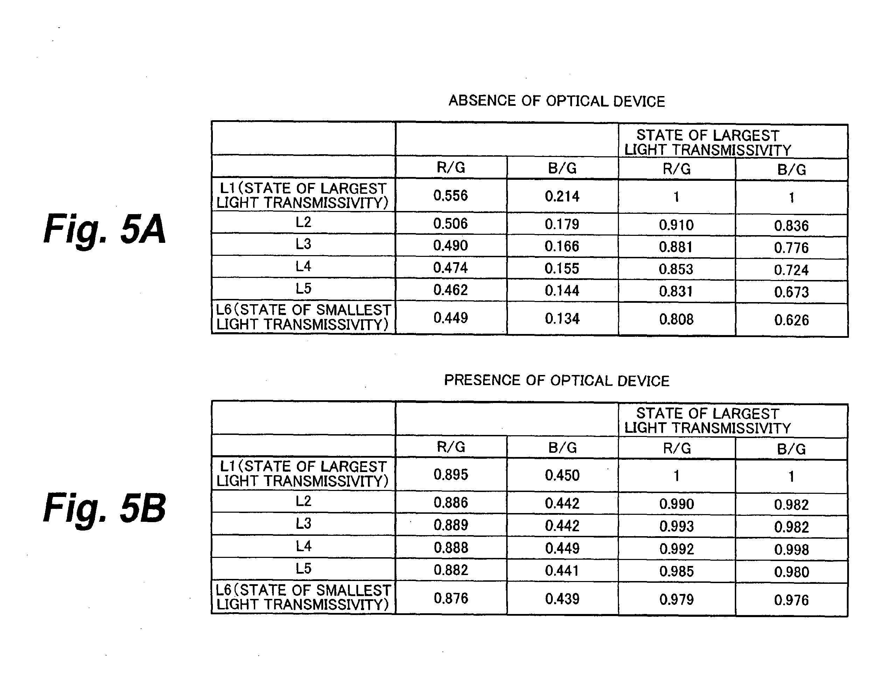

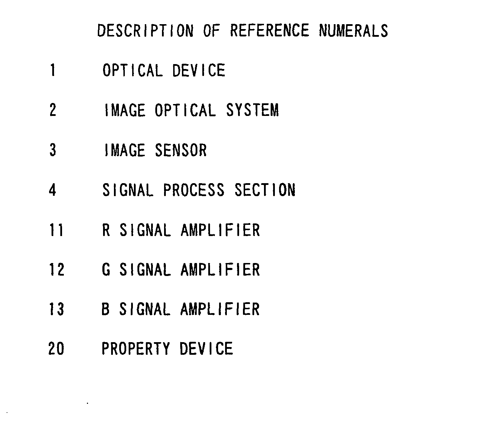

Next, with reference to Fig. 5A and Fig. 5B, the difference of output characteristics that depend on whether the optical device 1 is present will be described. Fig. 5A and Fig. 5B show an example of RGB ratios of white under an environment of illumination of a halogen lamp at a color temperature of 3200 K. The RGB ratios correspond to the ratios of outputs of the R signal amplifier 11 and the B signal amplifier 13 against the output of the G signal amplifier 12. Fig. 5A and Fig. 5B show the ratio (R / G) of the R signal and the G signal and the ratio (B / G) of the B signal and the G signal with respect to the individual states L1 to L6 of the property device 20.

Fig. 5A shows an example of which the optical device 1 is not used. When the optical device 1 is not used, the ratio R / G and the ratio B /G differ in each of the states L1 to L6. In other words, when the optical device 1 is not used, the white balance varies in each of the states L1 to L6. To compensate the RGB ratios in each of the states L1 to L6, the R signal amplifier 11, the G signal amplifier 12, and the B signal amplifier 13 need to have different compensation values. When the light transmissivity is more precisely controlled by the property device 20, the number of compensation values to be stored enormously increase.

Fig. 5B shows an example of the RGB ratios of which the optical device 1 and the property device 20 are used in combination according to the embodiment of the present invention. In the example shown in Fig. 5B, in each of the states L1 to L6 of the property device 20, the RGB ratios of white do not nearly vary. Thus, when the light transmissivity is more precisely controlled, it is clear that the white balance does not nearly vary.

The optical device 1 that has the characteristic as shown in Fig. 3 can be accomplished by coating a plurality of evaporation films on glass. Instead, the optical device 1 that has such a characteristic may be accomplished by color glass.

To accomplish the characteristic shown in Fig. 3, the optical device 1 needs to be coated with many evaporation films. Thus, the cost of the optical device 1 increases. Instead, the optical device 1 may have a characteristic that permissibly prevents the spectral characteristic of each of the states L1 to L6 from varying without the sharp attenuation characteristic shown in Fig. 3.

With the optical device 1 that has spectrum characteristics shown in Fig. 3, the sensitivity of a part of the visible light region is lost. Thus, when an object emits light having a color characteristic that is ruled by the visible light region, the difference between the visible sensitivity and the sensitivity of the optical device 1 may become large. However, since many objects have color characteristics based on the spectrum characteristics in a wide wavelength band of the visible light region except for a part of light having a very narrow wavelength band such as laser light, the color reproducibility of only an object that has a high red ratio deteriorates.

In the foregoing example, the optical device 1 is disposed in front of (on the incident side of) the property device 20. However, the present invention is not limited to this example. The optical device 1 and the property device 20 may be disposed on the same optical axis. Thus, the optical device 1 may be disposed behind the property device 20 (adjacent to the image sensor 3).

According to the present invention, since an optical device that blocks light having a wavelength larger than a predetermined wavelength is disposed in front of a property device that is capable of controlling light transmissivity, even if the light transmissivity is controlled by the property device and thereby the spectrum characteristic is varied, the color balance can be prevented from being varied.

In addition, since the optical device prevents the color balance from being varied when the light transmissivity is controlled by of the property device and thereby the spectrum characteristic is varied, the color reproducibility of a camera apparatus can be more easily and less expensively stabilized than the method of storing the variation characteristics of the property device and compensating the characteristics as the property device is controlled.

In addition, since the signal process circuit does not need to compensate signals, the circuit scale can be decreased. Thus, the production time of the camera apparatus can be shortened.

In addition, according to the embodiment of the present invention, when the light transmissivity is controlled by the property device and thereby the spectral characteristic is varied, the color balance can be prevented from being varied by a simple structure. Thus, the property device can be used as exposure control means of the camera apparatus. As a result, when the optical system of the camera apparatus does not use a mechanical diaphragm, a demerit of which the controllable illuminance range becomes narrow can be lightened.

In the camera apparatus according to the embodiment of the present invention, since the amount of incident light of an image sensor can be controlled by the property device that can control the light transmissivity, the aperture diameter does not vary unlike with the mechanical diaphragm that controls the amount of the incident light of the image sensor. Thus, the depth of field can be kept constant.

In addition, according to the present invention, since the variation of the color characteristic that takes place when the light transmissivity is controlled by the property device is permitted to some extent, the types of materials that can be used for the property device increase. As a result, a property device that has an excellent characteristic such as high response speed and equality of the light transmissivity can be selected from many types.

## Claims

1. An optical amount control apparatus that controls the amount of light with a property device that is capable of controlling light transmissivity, comprising:
an optical device that blocks light having a wavelength longer than a predetermined wavelength in a visible light region; and
the property device that is disposed on the same optical axis as the optical device and that is capable of controlling the light transmissivity.

2. The optical amount control apparatus as set forth in claim 1,
wherein the predetermined wavelength corresponds to a wavelength at which a wavelength region of which wavelength dependency of spectrum characteristic of the property device is weak changes to a wavelength region of which wavelength dependency of spectrum characteristic of the property device is strong.

3. A camera apparatus that controls the amount of incident light of an image sensor with a property device that is capable of controlling light transmissivity, comprising:
an optical device that blocks light having a wavelength longer than a predetermined wavelength in a visible light region;
the property device that is disposed on the same optical axis as the optical device and that is capable of controlling the light transmissivity; and
image capturing means for capturing light that is emitted from an object through the optical device and the property device.

4. The camera apparatus as set forth in claim 3,
wherein the predetermined wavelength corresponds to a wavelength at which a wavelength region of which wavelength dependency of spectrum characteristic of the property device is weak changes to a wavelength region of which wavelength dependency of spectrum characteristic of the property device is strong.
